# EUROPEAN PATENT APPLICATION

(11) **EP 2 194 479 A1**
(43) Date of publication of application: **09.06.2010**
(21) Application number: 09090020.0
(22) Date of filing: 25.11.2009
(51) Int. Cl.: G06F 21/00, G06F 11/14

(54) **Data protecting method and computing apparatus**

(30) Priority: 28.11.2008 TW 97146246
(71) Applicant: Chou, Hung-Chien, Taichung City, Nantun District (TW)
(72) Inventor: Chou, Hung-Chien, Taichung City, Nantun District (TW)
(74) Representative: Patentanwälte Bressel und Partner

(57) **Abstract**

A data protecting method, including the steps of: (a) upon receipt of a triggering command, configuring a hardware control module (1) to store data in a hidden zone (31) that is unidentifiable, unreadable and unwritable by an operating system block (4) in communication with the hardware control module (1) ; and (b) upon receipt of a restore request command (22) from an input device (2) in direct communication with the hardware control module (1), configuring the hardware control module (1) to execute the restore request command (22) so as to transfer the data from the hidden zone (31) to a working zone (32) that is identifiable, readable and writable by the operating system block (4) when a predetermined condition is satisfied.

## Description

The invention relates to a protecting method and an apparatus, more particularly to a data protecting method and a computing apparatus for implementing the same.

With the wide use of computing technology in everyday life, many people have experienced abnormal shutdown of operating systems, computer crashes, or have accidentally deleted or formatted important data, etc. Moreover, the advent of the Internet provides a spreading tool for computer viruses, which may result in data damages or destruction, sometimes causing unrecoverable losses.

Currently, two main ways of protecting data are as follows.
(1) Using a key to guard data access: For important data, such as personal information, a key is used to prevent unauthorized access thereto. However, this does not protect the data from damages or destructions due to computer viruses or other human factors and accidents.
(2) Using a recovery card: The recovery card provides an opportunity to recover data lost from computer virus infections, file deletion, or formatting a hard drive. However, a control program installed in an operating system is required to recover data in the hard drive. In other words, backup and recovery of the data are conducted by the control program. Therefore, when the operating system is corrupted by malicious software, operation of the control program may be interfered, such that the backup data may be tampered with, and even destroyed, leaving the computer vulnerable to unknown risks.

Consequently, how to effectively protect data from being tampered with or destroyed by computer viruses and malicious software is a goal that those in the computer field are striving to achieve.

Therefore, the object of the present invention is to provide a data protecting method that uses a hardware module to perform the backup of data and the recovery of operating systems.

According to one aspect of the present invention, there is provided a data protecting method that includes the steps of: (a) upon receipt of a triggering command, configuring a hardware control module to store data in a hidden zone that is unidentifiable, unreadable and unwritable by an operating system block in communication with the hardware control module; and (b) upon receipt of a restore request command from an input device in direct communication with the hardware control module, configuring the hardware control module to execute the restore request command so as to transfer the data from the hidden zone to a working zone that is identifiable, readable and writable by the operating system block when a predetermined condition is satisfied.

According to another aspect of the present invention, there is provided a computing apparatus that includes an operating system block, a data storage device, and a hardware control module. The data storage device includes a hidden zone that is unidentifiable, unreadable and unwritable by the operating systemblock, and a working zone that is identifiable, readable and writable by the operating system block. The hardware control module is in communication with the operating system block, and is responsive to a triggering command for storing data in the hidden zone of the data storage device. The hardware control module is further responsive to a restore request command from an input device for executing the restore request command so as to transfer the data from the hidden zone to the working zone when it is determined by the hardware control module that a predetermined condition is satisfied.

Other features and advantages of the present invention will become apparent in the following detailed description of the preferred embodiments with reference to the accompanying drawings, of which:
FIG.1 is a block diagram of a computing apparatus according to the first and second preferred embodiments of the present invention;
FIG.2 is a flow chart, illustrating a data protecting method according to the first preferred embodiment of the present invention; and
FIG.3A and FIG.3B are flow charts, illustrating a data protecting method according to the second preferred embodiment of the present invention.

Before the present invention is described in greater detail, it should be noted that like elements are denoted by the same reference numerals throughout the disclosure.

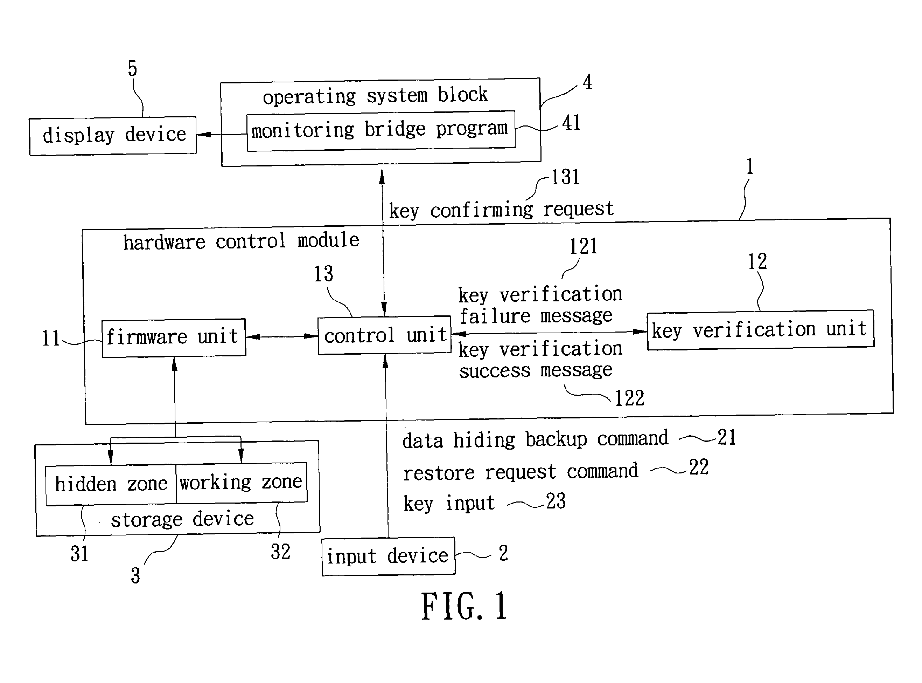

Referring to FIG.1, according to the first and second preferred embodiments of the present invention, a computing apparatus includes an operating system block 4, a data storage device 3, and a hardware control module 1.

The data storage device 3 includes a hidden zone 31 that is unidentifiable, unreadable and unwritable by the operating system block 4, and a working zone 32 that is identifiable, readable and writable by the operating system block 4. The data storage device 3 may be one of a hard drive, a flash memory, a solid state disk (SSD), or any other devices permitting storage of data.

The hardware control module 1 is in communication with the operating system block 4, and is responsive to a triggering command for storing data in the hidden zone 31 of the data storage device 3.

The hardware control module 1 is further responsive to a restore request command 22 from an input device 2 for executing the restore request command 22 so as to transfer the data from the hidden zone 31 to the working zone 32 when it is determined by the hardware control module 1 that a predetermined condition is satisfied. The input device 2 may be one of a keyboard, a mouse, a touch pad, or any other devices permitting input of information.

In particular, upon receipt of the restore request command 22, the hardware control module 1 is configured to generate a key confirming request 131 to be displayed on a display device 5 (e.g., a liquid crystal display (LCD)) via the operating system block 4 to prompt a user for a key input 23. Upon receipt of the key input 23, the hardware control module 1 is configured to determine if the key input 23 matches a predefined key. When it is determined that the key input 23 matches the predefined key, the hardware control module 1 is configured to execute the restore request command 22 so as to transfer the data from the hidden zone 31 to the working zone 32.

In particular, the hardware control module 1 includes a control unit 13, a key verification unit 12, and a firmware unit 11. The control unit 13 is adapted to be coupled to the input device 2 for receiving the restore request command 22 therefrom, is coupled to the operating system block 4, and generates the key confirming request 131 to be displayed on the display device 5 via the operating system block 4 upon receipt of the restore request command 22 to prompt the user for the key input 23. The key verification unit 12 is coupled to the control unit 13, determines, upon receipt of the key input 23 by the user, if the key input 23 matches a predefined key, and transmits a comparison result to the control unit 13. The firmware unit 11 is coupled to the control unit 13 and the data storage device 3.

When the key verification unit 12 determines that the key input 23 matches the predefined key, the key verification unit 12 is configured to transmit a key verification success message 122 to the control unit 13, and the control unit 13 executes the restore request command 22 by controlling the firmware unit 11 to transfer the data from the hidden zone 31 to the working zone 32 upon receipt of the restore request command 22 from the input device 2.

When the key verification unit 12 determines that the key input 23 does not match the predefined key, the key verification unit 12 is configured to transmit a key verification failure message 121 to the control unit 13, and the control unit 13 is configured to refuse to execute the restore request command 22 upon receipt of the key verification failure message 121.

It should be noted herein that, in practice, upon receipt of the restore request command 22, the control unit 13 may generate a list of at least one restore point for selection by the user, where each restore point corresponds to a point in time where the data is stored in the hidden zone 31. The data corresponding to a selected restore point is transferred from the hidden zone 31 to the working zone 32 when it is determined that the key input 23 matches the predefined key. Such variations should be readily apparent to those skilled in the art, and the disclosure herein should not be taken to limit the scope of the present invention.

According to the first preferred embodiment, upon receipt of the triggering command, the control unit 13 controls the firmware unit 11 to store data in the hidden zone 31 of the data storage device 3.

According to the second preferred embodiment, the triggering command is a data hiding backup command 21 received from the input device 2. Upon receipt of the data hiding backup command 21, the control unit 13 generates the key confirming request 131 to be displayed on the display device 5 via the operating system block 4 to prompt the user for the key input 23. Upon receipt of the key input 23 by the user, the key verification unit 12 determines if the key input 23 matches the predefined key.

When it is determined by the key verification unit 12 that the key input 23 matches the predefined key, the key verification unit 12 is configured to transmit a key verification success message 122 to the control unit 13, and the hardware control module 1 is configured to execute the data hiding backup command 21, where the control unit 13 controls the firmware unit 11 so as to store data in the hidden zone 31 of the data storage device 3.

When the key verification unit 12 determines that the key input 23 does not match the predefined key, the key verification unit 12 is configured to transmit a key verification failure message 121 to the control unit 13, and the control unit 13 is configured to refuse to execute the data hiding backup command 21 upon receipt of the key verification failure message 121.

It should be noted herein that in the second preferred embodiment, the data hiding backup command 21 is provided manually by the user via the input device 2. However, in practice, the data hiding backup command 21 may be generated automatically once the computing apparatus is turned on to operate, or once every predetermined period of time (e.g., 10 minutes) during operation of the computing apparatus so as to backup system data. Such variations should be readily apparent to those skilled in the art, and the disclosure herein should not be taken to limit the scope of the present invention.

It should be further noted herein that the key input 23 provided by the user is provided only to the hardware control module 1, that key comparison is performed by the key verification unit 12 of the hardware control module 1, and that only the comparison result (match or does not match) is provided to the operating system block 4. Consequently, even if the operating system block 4 is attacked by a malicious software, the key necessary for performing data backup or system restore will not be stolen, tampered, or destroyed by the malicious software.

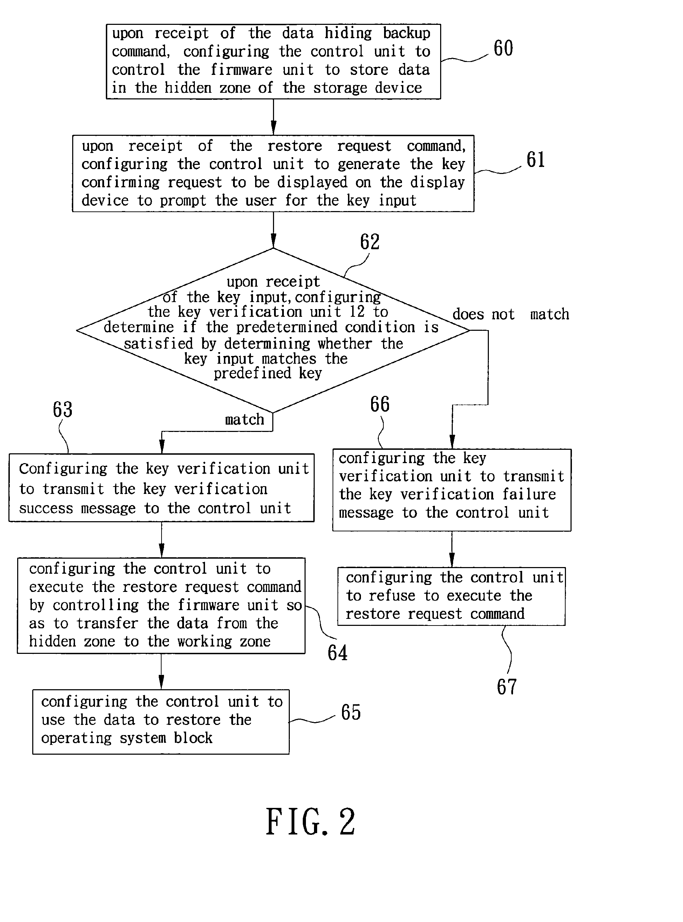

With further reference to FIG.2, the data protecting method according to the first preferred embodiment of the present invention includes the following steps.

In step 60, upon receipt of the data hiding backup command 21, the control unit 13 is configured to control the firmware unit 11 to store data in the hidden zone 31 that is unidentifiable, unreadable and unwritable by the operating system block 4.

In step 61, upon receipt of the restore request command 22 from the input device 2, the control unit 13 is configured to generate the key confirming request 131 to be displayed on the display device 5 to prompt the user for the key input 23.

In this embodiment, the control unit 13 is configured to transmit the key confirming request 131 to a monitoring bridge program 41 installed in the operating system block 4 for displaying the key confirming request 131 on the display device 5. The monitoring bridge program 41 has the ability of assisting communication between the hardware control module 1 and the operating system block 4, thereby aiding in the storage of the data in the hidden zone 31 so as to protect the data from a possibly corrupted operating system block 4, and in the restoration of the operating system block 4 using the data that has been transferred from the hidden zone 31 into the working zone 32 when such a restoration is required by the user.

In step 62, upon receipt of the key input 23, the key verification unit 12 is configured to determine if the predetermined condition is satisfied by determining whether the key input 23 matches the predefined key.

When it is determined in step 62 that the key input 23 matches the predefined key, the flow goes to step 63, where the key verification unit 12 is configured to transmit the key verification success message 122 to the control unit 13.

In step 64, the control unit 13 is configured to execute the restore request command 22 by controlling the firmware unit 11 so as to transfer the data from the hidden zone 31 to the working zone 32.

In step 65, the control unit 13 of the hardware control module 1 is configured to use the data to restore the operating system block 4.

It should be noted herein that there may be a step 68 in between steps 64 and 65, where the control unit 13 is configured to generate the list of at least one restore point for selection by the user, and later on in step 65, the operating system block 4 is restored using the data corresponding to the selected restore point. Each restore point corresponds to a point in time where the data hiding backup command 21 is executed.

When it is determined in step 62 that the key input does not match the predefined key, the flow goes to step 66, wherein the key verification unit 12 is configured to transmit the key verification failure message 122 to the control unit 13.

In step 67, the control unit 13 is configured to refuse to execute the restore request command 22.

A practical operational application is presented hereinbelow with reference to FIG. 1 to better illustrate the first preferred embodiment of the present invention.

First, when a user wishes to transfer data from the working zone 32 to the hidden zone 31 in order to prevent the data from being corrupted by computer viruses, malicious software, or due to other factors, the user inputs the data hiding backup command 21 into the control unit 13 of the hardware control module 1 via the input device 2.

Subsequently, upon receipt of the data hiding backup command 21, the control unit 13 controls the firmware unit 11 to store the data in the hidden zone 31 that is unidentifiable, unreadable and unwritable by the operating system block 4.

Next, when the user wishes to perform restoration on the operation system block 4, the user inputs the restore request command 22 into the control unit 13 of the hardware control module 1 via the input device 2.

Then, the control unit 13 generates the key confirming request 131 to be displayed on the display device 5 to prompt the user for the key input. After the user inputs the key input using the input device 2, the key verification unit 12 compares the key input with the predefined key, and informs the control unit 13 of the verification result by selectively transmitting the key verification success message 122 or the key verification failure message 121 to the control unit 13.

If the verification result shows that the key matches the predefined key, the control unit 13 executes the restore request command 22 by controlling the firmware unit 11 to transfer the data from the hidden zone 31 to the working zone 32, and cooperates with the operating system block 4 to perform the restoration operation using the data.

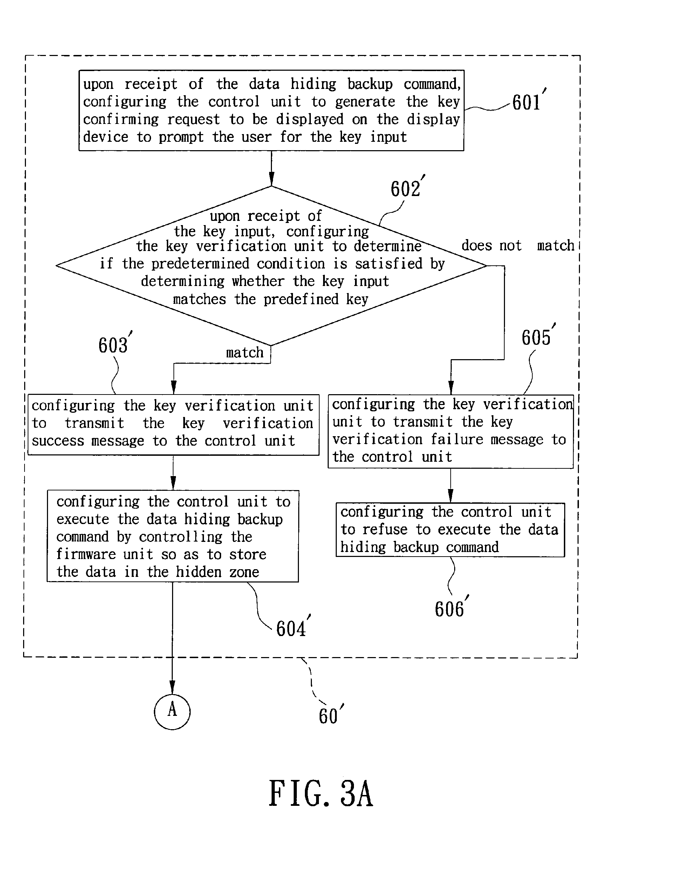

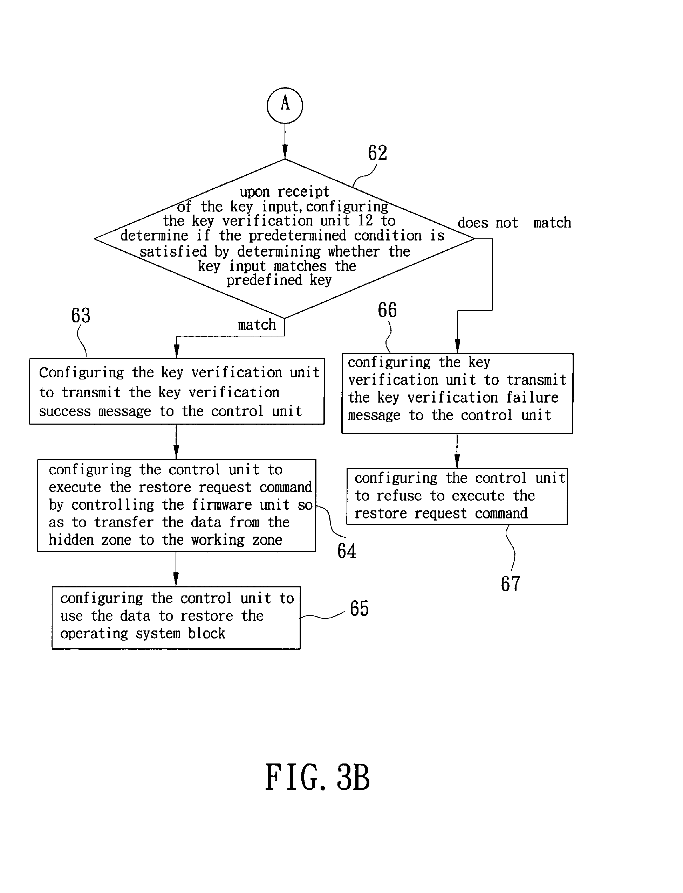

With reference to FIG.1, FIG.3A and FIG.3b, the data protecting method according to the second preferred embodiment of the present invention is similar to the first preferred embodiment. The only difference between the first and second preferred embodiments is that according to the second preferred embodiment, the data hiding backup command 21 is only executed by the hardware control module 1 when the predefined condition identical to that for the restore request command 22 is satisfied. In other words, step 60' of the second preferred embodiment includes the following sub-steps.

In sub-step 601', upon receipt of the data hiding backup command 21, the control unit 13 is configured to generate the key confirming request 131 to be displayed on the display device 5 to prompt the user for the key input 23.

In sub-step 602', upon receipt of the key input 23, the key verification unit 12 is configured to determine if the predetermined condition is satisfied by determining whether the key input 23 matches the predefined key.

When it is determined in sub-step 602' that the key input 23 matches the predefined key, the flow goes to sub-step 603', where the key verification unit 12 is configured to transmit the key verification success message 122 to the control unit 13.

In sub-step 604', the control unit 13 is configured to execute the data hiding backup command 21 by controlling the firmware unit 11 so as to store the data in the hidden zone 31.

When it is determined in sub-step 602' that the key input does not match the predefined key, the flow goes to sub-step 605', wherein the key verification unit 12 is configured to transmit the key verification failure message 122 to the control unit 13.

In sub-step 606', the control unit 13 is configured to refuse to execute the data hiding backup command 21.

It should be noted herein that the data stored in the hidden zone 31 is not limited to a normal file format data, but can also be a record of at least an operating command inputted from the input device 2, such as a selection or key-in command from a keyboard or a series of operation commands from a mouse. Therefore, correspondingly, when the data backed up in the hidden zone 31 records the operating command inputted from the input device 2, after the restore request command 22 is executed by the hardware control module 1 such that the data is transferred into the working zone 32, the operating system block 4 is restored back to a state immediately before executing the recorded operating command by undoing the recorded operating command. Moreover, in one such circumstance, the restoration of the operating system block 4 may be presented in a form of images, such as visually going back a trace of the series of operation commands from the mouse on the display device 5.

In sum, the data protecting method and the computing apparatus of the present invention achieve the object of preventing data from being tampered with due to computer virus infection or the presence of a malicious software by ensuring that the transfer of the data from the hidden zone 31 to the working zone 32 of the storage device 3 is guarded by the hardware control module 1 with the predefined key, where the restore request command 22 (or even the data hiding backup command 21) is only verified when the key inputted by the user matches the predefined key, that the key inputted by the user is only accessible by the hardware control module 1, where key verification is performed by the key verification unit 12 of the hardware control module 1, and that only the verification result (match or does not match) is provided to the operating system block 4. Consequently, even if the operating system block 4 is attacked by a malicious software, the data stored in the hidden zone 31 necessary for performing certain functions (such as restoring the operating system block 4) will not be damaged or tampered with by the malicious software.

## Claims

1. A data protecting method, comprising the steps of:
(a) upon receipt of a triggering command, configuring a hardware control module (1) to store data in a hidden zone (31) that is unidentifiable, unreadable and unwritable by an operating system block (4) in communication with the hardware control module (1); and
(b) upon receipt of a restore request command (22) from an input device (2) in direct communication with the hardware control module (1), configuring the hardware control module (1) to execute the restore request command (22) so as to transfer the data from the hidden zone (31) to a working zone (32) that is identifiable, readable and writable by the operating system block (4) when a predetermined condition is satisfied.

2. The data protecting method as claimed in Claim 1, wherein step (b) includes the sub-steps of:
(b-1) upon receipt of the restore request command (22), configuring the hardware control module (1) to generate a key confirming request (131) to be displayed on a display device (5) to prompt a user for a key input (23);
(b-2) upon receipt of a key input (23), configuring the hardware control module (1) to determine if the predetermined condition is satisfied by determining whether the key input (23) matches a predefined key; and
(b-3) configuring the hardware control module (1) to execute the restore request command (22) so as to transfer the data from the hidden zone (31) to the working zone (32) when it is determined that the key input (23) matches the predefined key.

3. The data protecting method as claimed in Claim 1 or 2, wherein, in step (a), the data is stored in the hidden zone (31) by a firmware unit (11) of the hardware control module (1), and, in step (b), the data is stored in the working zone (32) by the firmware unit (11).

4. The data protecting method as claimed in Claim 2, further comprising the step of:
(c) configuring the hardware control module (1) to refuse to execute the restore request command (22) when it is determined in sub-step (b-2) that the key input (23) does not match the predefined key.

5. The data protecting method as claimed in any one of Claims 1 to 4, wherein, in step (a), the triggering command is a data hiding backup command (21) received from the input device (2).

6. The data protecting method as claimed in Claim 5, wherein step (a) includes the sub-steps of:
(a-1) upon receipt of the data hiding backup command (21), configuring the hardware control module (1) to generate a key confirming request (131) to be displayed on a display device (5) to prompt a user for a key input (23);
(a-2) upon receipt of a key input (23), configuring the hardware control module (1) to determine if the key input (23) matches a predefined key; and
(a-3) configuring the hardware control module (1) to store the data in the hidden zone (31) when it is determined that the key input (23) matches the predefined key.

7. The data protecting method as claimed in Claim 6, wherein step (a) further includes the sub-step of (a-4) configuring the hardware control module (1) to refuse to store the data in the hidden zone (31) when it is determined that the key input (23) does not match the predefined key.

8. The data protecting method as claimed in any one of Claims 1 to 7, further comprising the step of:
(d) configuring the hardware control module (1) to use the data to restore the operating system block (4).

9. The data protecting method as claimed in Claim 6 or 7, wherein, in sub-step (a-1), the hardware control module (1) is configured to transmit the key confirming request (131) to a monitoring bridge program (41) installed in the operating system block (4) for displaying the key confirming request (131) on the display device (5).

10. A computing apparatus comprising:
an operating system block (4);
a data storage device (3) including a hidden zone (31) that is unidentifiable, unreadable and unwritable by said operating system block (4), and a working zone (32) that is identifiable, readable and writable by said operating system block (4); and
a hardware control module (1) in communication with said operating system block (4), and responsive to a triggering command for storing data in said hidden zone (31) of said data storage device (3);
wherein said hardware control module (1) is further responsive to a restore request command (22) from an input device (2) for executing the restore request command (22) so as to transfer the data from said hidden zone (31) to said working zone (32) when it is determined by said hardware control module (1) that a predetermined condition is satisfied.

11. The computing apparatus as claimed in Claim 10, wherein:
upon receipt of the restore request command (22), said hardware control module (1) is configured to generate a key confirming request (131) to be displayed on a display device (5) via said operating system block (4) to prompt a user for a key input (23);
upon receipt of a key input (23), said hardware control module (1) is configured to determine if the key input (23) matches a predefined key; and
when it is determined that the key input (23) matches the predefined key, said hardware control module (1) is configured to execute the restore request command (22) so as to transfer the data from said hidden zone (31) to said working zone (32).

12. The computing apparatus as claimed in Claim 11, wherein said hardware control module (1) includes:
a control unit (13) adapted to be coupled to the input device (2) for receiving the restore request command (22) therefrom, coupled to said operating system block (4), and generating the key confirming request (131) to be displayed on the display device (5) via said operating system block (4) upon receipt of the restore request command (22) to prompt the user for the key input (23) ;
a key verification unit (12) coupled to said control unit (13), determining, upon receipt of the key input (23) by the user, if the key input (23) matches a predefined key, and transmitting a comparison result to said control unit (13); and
a firmware unit (11) coupled to said control unit (13) and said data storage device (3);
wherein, upon receipt of the triggering command, said control unit (13) controls said firmware unit (11) to store data in said hidden zone (31) of said data storage device (3);
wherein, when it is determined by said key verification unit (12) that the key input (23) matches the predefined key, said control unit (13) executes the restore request command (22) by controlling said firmware unit (11) to transfer the data from said hidden zone (31) to said working zone (32) upon receipt of the restore request command (22) from the input device (2).

13. The computing apparatus as claimed in Claim 12, wherein said key verification unit (12) is configured to transmit a key verification failure message (121) to said control unit (13) when said key verification unit (12) determines that the key input (23) does not match the predefined key, and said control unit (13) is configured to refuse to execute the restore request command (22) upon receipt of the keyverification failure message (121).

14. The computing apparatus as claimed in Claim 10, wherein the triggering command is a data hiding backup command (21) received from the input device (2).

15. The computing apparatus as claimed in Claim 14, wherein:
upon receipt of the data hiding backup command (21), said hardware control module (1) is configured to generate a key confirming request (131) to be displayed on a display device (5) via said operating system block (4) to prompt a user for a key input (23);
upon receipt of the key input (23), said hardware control module (1) is configured to determine if the key input (23) matches a predefined key; and
when it is determined that the key input (23) matches the predefined key, said hardware control module (1) is configured to execute the data hiding backup command (21) so as to store the data in said hidden zone (31).

16. The computing apparatus as claimed in Claim 15, wherein said hardware control module (1) includes:
a control unit (13) coupled to said operating system block (4), and generating the key confirming request (131) to be displayed on the display device (5) via said operating system block (4) upon receipt of the data hiding backup command (21) to prompt a user for a key input (23);
a key verification unit (12) coupled to said control unit (13), determining, upon receipt of the key input (23) by the user, if the key input (23) matches a predefined key, and transmitting a comparison result to said control unit (13); and
a firmware unit (11) coupled to said control unit (13) and said data storage device (3);
wherein, when it is determined by said key verification unit (12) that the key input (23) matches the predefined key, said control unit (13) controls said firmware unit (11) to store data in said hidden zone (31) of said data storage device (3).
